# EUROPEAN PATENT APPLICATION

(11) **EP 3 313 037 A1**
(43) Date of publication of application: **25.04.2018**
(21) Application number: 15895368.7
(22) Date of filing: 09.09.2015
(51) Int. Cl.: H04L 29/06

(54) **MESSAGE SENDING METHOD AND DEVICE**

(30) Priority: 18.06.2015 CN 201510342156
(71) Applicant: ZTE Corporation, Shenzhen, Guangdong 518057 (CN)
(72) Inventor: LIN, Lang, Shenzhen Guangdong 518057 (CN)
(74) Representative: Perronace, Andrea
(86) International application number: PCT/CN2015/089281
(87) International publication number: WO 2016/201795

(57) **Abstract**

A message sending method and device is provided. The method includes that: a first server in a first network receives at least one message sent by a first terminal in the first network, and the message is sent to a second terminal which is located in a second network; the first server determines a mapping relationship between the first terminal and the second terminal, and the mapping relationship includes mapping from at least one service type supported by the first network to at least one service type supported by the second network; and the first server sends the at least one message to the second terminal according to the determined mapping relationship. By the present invention, a problem of incomplete intercommunication rules between a SIMPLE IM specification and a CPM specification in the related art is solved, and an effect of improving the intercommunication rules between the SIMPLE IM specification and the CPM specification is further achieved.

## Description

### Technical Field

The present invention relates to the field of communications, and in particular to a message sending method and device.

### Background

Along with rapid development of mobile Internet, services of providing various kinds of application service for users through the mobile Internet take big steps and severely impact conventional voice and short message services of telecommunications. A conventional telecommunication operator is required to transform to meet challenges of a mobile Internet era.

A Global system for Mobile Communication Association (GSMA) published a Rich Communication Suite (RCS) plan in 2009 and got back responses of many European operators. In 2010, five European telecommunication giants including Telefonica of Spain, Vodafone of Britain, Orange of France, Telecom Italia and Deutsche Telekom decided to launch own instant messaging system together and named this system as "Joyn", as a formal declaration of war to an Over The Top (OTT) application. At present, there have been 28 operators of 17 countries throughout the world launched RCS/Joyn service in 2014, and 85 top-level mobile operators committed to launch RCS service before 2015. China Mobile released a "next-generation communication white paper" at a beginning of February in 2014, to demonstrate a determination of the China Mobile for service innovation and transformation.

An early message type service specification established by a Open Mobile Alliance (OMA) for RCS systems is Session Initiation Protocol Instant Messaging and Presence Leveraging Extensions Instant Message (SIMPLE IM), so that operators deploying the RCS systems in an early stage all design message type services in the RCS systems with reference to a SIMPLE IM specification. After publishing a Converged Internet Protocol Messaging (CPM) specification, the OMA announces that no subsequent versions of the SIMPLE IM will be established and a new requirement will be continuously standardized in an OMA CPM project. Some operators deploying RCS systems after the CPM specification is published, for example, the China Mobile, select to define message type services in the RCS systems by adopting the CPM specification. The SIMPLE IM specification and the CPM specification have greater differences in services of a one-to-one chat, a group chat and the like. And for contending with an OTT service, interconnection and intercommunication is a necessary requirement on RCS, so that intercommunication between different RCS systems is an important factor for smooth development of the RCS systems. However, because the CPM specification is published later, both the GSMA and the OMA establishes some simple intercommunication specifications or guides to describe some basic concepts and principles in intercommunication, and there are still no complete and specific implementation solutions.

For a problem of incomplete intercommunication rules between the SIMPLE IM specification and the CPM specification in related art, there is yet no effective solution at present.

### Summary

As least some embodiments of present invention provide a message sending method and device, so as at least partially to solve a problem of incomplete intercommunication rules between a SIMPLE IM specification and a CPM specification in the related art.

In one embodiment of the present invention, a message sending method is provided, including: receiving, by a first server in a first network, at least one message sent by a first terminal in the first network, and the at least one message is sent to a second terminal and the second terminal is located in a second network; determining, by the first server, a mapping relationship between the first terminal and the second terminal, and the mapping relationship includes mapping from at least one service type supported by the first network to at least one service type supported by the second network; and sending, by the first server, the at least one message to the second terminal according to the determined mapping relationship.

In an exemplary embodiment, the mapping relationship includes at least one of: a session-terminal mapping, a session-session mapping, a terminal-session mapping and a terminal-terminal mapping.

In an exemplary embodiment, sending, by the first server, the at least one message to the second terminal according to the mapping relationship includes: sending, by the first server, the at least one message to a second server in the second network according to the mapping relationship, and the at least one message is sent, by the second server, to the second terminal.

In an exemplary embodiment, before sending, by the first server, the at least one message to the second terminal according to the mapping relationship, the method further includes: caching, by the first server, the at least one message.

In an exemplary embodiment, after caching, by the first server, the at least one message, the method further includes: creating, by the first server, a session between the first server and the first terminal in a manner of negotiation with the first terminal.

In an exemplary embodiment, before receiving, by the first server in the first network, the at least one message sent by the first terminal in the first network, the method further includes: creating, by the first server, a session between the first server and the first terminal in a manner of negotiation with the first terminal.

In an exemplary embodiment, the first network and the second network are Rich Communication Suite (RCS) networks supporting different specifications.

In another embodiment of the present invention, a message sending method is provided, including: receiving, by a group chat server or conference server in a first network, a request message for requesting to recreate a group chat session from a terminal in a group; and sending, by the group chat server or the conference server, a notification message to other group chat members in the group according to the request message, and the notification message is used for notifying the other group chat members in the group to recreate the group chat session.

In an exemplary embodiment, sending, by the group chat server or the conference server, the notification message to the other group chat members in the group according to the request message includes: when the other group chat members include at least one terminal in a second network, sending, by the group chat server or the conference server, the notification message to a second server in the second network, and the notification message is sent, by the second server, to the at least one terminal in the second network.

In an exemplary embodiment, when the first network adopts a conference-based group chat mode, the conference server in the first network receives the request message sent by one terminal in the group; and when the first network adopts a conference-free group chat mode, the group chat server in the first network receives the request message sent by the one terminal in the group.

In an exemplary embodiment, receiving, by the group chat server or conference server in the first network, the request message sent by the one terminal in the group includes: when the one terminal in the group is a terminal in the first network, receiving, by the group chat server or the conference server, the request message sent by the terminal in the group; and when the one terminal in the group is a terminal in the second network, receiving, by the group chat server or the conference server, the request message sent by the terminal in the group in a manner of receiving the request message sent by the second server in the second network.

In an exemplary embodiment, the first network and the second network are Rich Communication Suite (RCS) networks supporting different specifications.

In another embodiment of the present invention, a message sending device is provided, which is applied to a first server in a first network and includes: a first receiving component, arranged to receive at least one message sent by a first terminal in the first network, and the at least one message is sent to a second terminal, and the second terminal is located in a second network; a determination component, arranged to determine a mapping relationship between the first terminal and the second terminal, and the mapping relationship includes mapping from at least one service type supported by the first network to at least one service type supported by the second network; and a first sending component, arranged to send the at least one message to the second terminal according to the determined mapping relationship.

In an exemplary embodiment, the mapping relationship includes at least one of: a session-terminal mapping, a session-session mapping, a terminal-session mapping and a terminal-terminal mapping.

In an exemplary embodiment, the first sending component includes: a first sending element, arranged to send the at least one message to a second server in the second network according to the mapping relationship, and the at least one message is sent, by the second server, to the second terminal.

In an exemplary embodiment, the device further includes: a caching component, arranged to cache the at least one message.

In an exemplary embodiment, the device further includes: a first creation component, arranged to create a session between the first server and the first terminal in a manner of negotiation with the first terminal.

In an exemplary embodiment, the device further includes: a second creation component, arranged to create a session between the first server and the first terminal in a manner of negotiation with the first terminal.

In an exemplary embodiment, the first network and the second network are Rich Communication Suite (RCS) networks supporting different specifications.

In another embodiment of the present invention, a message sending device is provided, which is applied to a group chat server or conference server in a first network and includes: a second receiving component, arranged to receive a request message for requesting to recreate a group chat session from a terminal in a group; and a second sending component, arranged to send a notification message to other group chat members in the group according to the request message, and the notification message is used for notifying the other group chat members in the group to recreate the group chat session.

In an exemplary embodiment, the second sending component includes: a second sending element, arranged to, when the other group chat members include at least one terminal in a second network, send the notification message to a second server in the second network, and the notification message is sent, by the second server, to the at least one terminal in the second network.

In an exemplary embodiment, when the first network adopts a conference-based group chat mode, the conference server in the first network receives the request message sent by one terminal in the group; and when the first network adopts a conference-free group chat mode, the group chat server in the first network receives the request message sent by the one terminal in the group.

In an exemplary embodiment, the second receiving component includes: a first receiving element, arranged to, when the one terminal in the group is a terminal in the first network, receive the request message sent by the terminal in the group; and a second receiving element, arranged to, when the one terminal in the group is a terminal in the second network, receive the request message sent by the terminal in the group in a manner of receiving the request message sent by the second server in the second network.

According to the at least some embodiments of the present invention, the first server in the first network receives at least one message sent by the first terminal in the first network, and the message is sent to the second terminal which is located in the second network; the first server determines the mapping relationship between the first terminal and the second terminal, and the mapping relationship includes mapping from at least one service type supported by the first network to at least one service type supported by the second network; and the first server sends the at least one message to the second terminal according to the determined mapping relationship, so that the problem of incomplete intercommunication rules between a SIMPLE IM specification and a CPM specification in the related art is solved, and an effect of improving the intercommunication rules between the SIMPLE IM specification and the CPM specification is further achieved.

### Brief Description of the Drawings

The drawings described here are adopted to provide a further understanding to the present invention, and form a part of the application. Schematic embodiments of the present invention and descriptions thereof are adopted to explain the present invention and not intended to form improper limits to the present invention. In the drawings:
Fig. 1 is a flowchart of a first message sending method according to an embodiment of the present invention.
Fig. 2 is a flowchart of a second message sending method according to an embodiment of the present invention.
Fig. 3 is a structural block diagram of a first message sending device according to an embodiment of the present invention.
Fig. 4 is a structural block diagram of a first sending component 36 in a first message sending device according to an embodiment of the present invention.
Fig. 5 is a structural block diagram of a first message sending device according to a first exemplary embodiment of the present invention.
Fig. 6 is a structural block diagram of a first message sending device according to a second exemplary embodiment of the present invention.
Fig. 7 is a structural block diagram of a first message sending device according to a third exemplary embodiment of the present invention.
Fig. 8 is a structural block diagram of a second message sending device according to an embodiment of the present invention.
Fig. 9 is a structural block diagram of a second sending component 84 in a second message sending device according to an embodiment of the present invention.
Fig. 10 is a structural block diagram of a second receiving component 82 in a second message sending device according to an embodiment of the present invention.
Fig. 11 is an intercommunication networking diagram of RCS networks according to an embodiment of the present invention.
Fig. 12 is a chat flowchart from a Large mode to a Chat mode according to an embodiment of the present invention.
Fig. 13 is a chat flowchart from a Pager mode to a Chat mode according to an embodiment of the present invention.
Fig. 14 is a chat flowchart from a Chat mode to a Large mode according to an embodiment of the present invention.
Fig. 15 is a chat flowchart from a Chat mode to a Pager mode according to an embodiment of the present invention.
Fig. 16 is an intercommunication flowchart of a group chat service according to an embodiment of the present invention.

### Detailed Description

The present invention will be described below with reference to the drawings and in combination with embodiments in detail. It is important to note that the embodiments in the application and characteristics in the embodiments are combined without conflicts.

It is important to note that terms "first", "second" and the like in the specification, claims and drawings of the present invention are adopted not to describe a specific sequence or order but to distinguish similar objects.

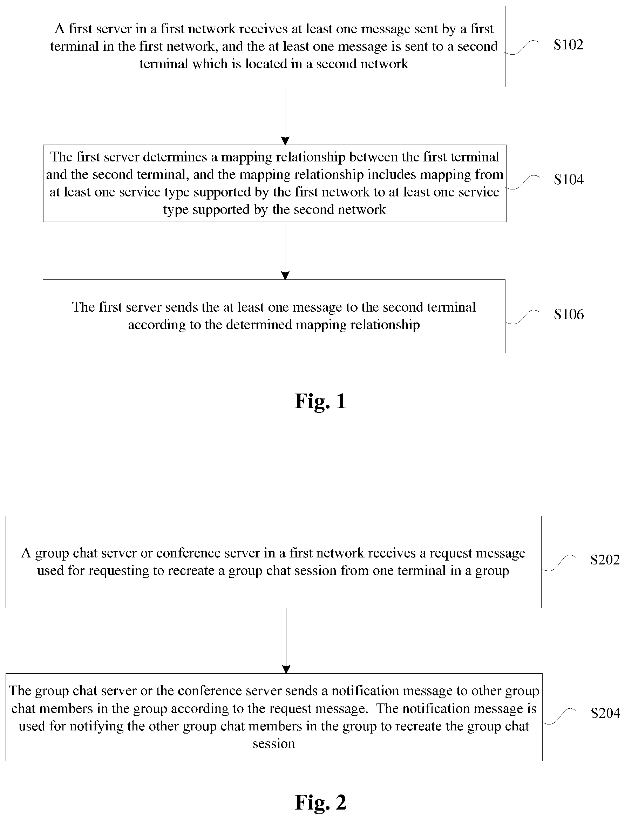

In one embodiment, a message sending method is provided. Fig. 1 is a flowchart of a first message sending method according to an embodiment of the present invention. According to at least one embodiment as shown in Fig. 1, the flow includes the following steps.

At Step S102, a first server in a first network receives at least one message sent by a first terminal in the first network, and the at least one message is sent to a second terminal which is located in a second network.

At Step S104, the first server determines a mapping relationship between the first terminal and the second terminal, and the mapping relationship includes mapping from at least one service type supported by the first network to at least one service type supported by the second network.

At Step S106, the first server sends the at least one message to the second terminal according to the determined mapping relationship.

By the steps, when the at least one message is transmitted between two networks, the first server in the first network transmits the at least one message according to the determined mapping relationship of terminals in the two networks. And the two networks are RCS networks supporting different specifications, for example, the first network supports a SIMPLE IM specification and the second network supports a CPM specification, so that intercommunication between difference specifications is effectively implemented, the problem of incomplete intercommunication rules between the SIMPLE IM specification and the CPM specification in the related technology is solved, and an effect of improving the intercommunication rules between the SIMPLE IM specification and the CPM specification is further achieved.

There are multiple mapping relationships. In an exemplary embodiment, the mapping relationship includes at least one of: a session-terminal mapping, a session-session mapping, a terminal-session mapping and a terminal-terminal mapping. The terminal is understood as a session-free mode, and the session is understood as a session mode. Not only mapping between a session mode to the session mode is implemented, but also mapping between a session-free mode and the session mode or mapping between the session-free mode and the session-free mode is implemented, so that intercommunication between different specifications is effectively realized.

The first terminal and the second terminal are located in different networks, and intercommunication of the terminals between the two different networks is implemented by the servers in the two different networks. In an exemplary embodiment, the step that the first server sends the at least one message to the second terminal according to the mapping relationship includes that: the first server sends the at least one message to a second server in the second network according to the mapping relationship, and the message is sent, by the second server, to the second terminal.

In an exemplary embodiment, before the step that the first server sends the at least one message to the second terminal according to the mapping relationship, the method further includes that: the first server caches the at least one message. That is, after receiving the at least one message sent by the first terminal, the first server temporally not sends the at least one message but cache the at least one message, and then sends the at least one message at a proper opportunity.

A session is created between the first server and the first terminal, and there may be multiple opportunities for creating the session. In an exemplary embodiment, the first server creates the session between the first server and the first terminal in a manner of negotiation with the first terminal after the first server caches the at least one message, and specifically how to create the session will be specifically described below.

When the session between the first server and the first terminal is created, the first server also creates the session between the first server and the first terminal in the manner of negotiation with the first terminal before the first server in the first network receives the at least one message sent by the first terminal in the first network, and specifically how to create the session will be specifically described below.

In an exemplary embodiment, the first network and the second network are RCS networks supporting different specifications.

At least some abovementioned embodiments are mainly for a one-to-one chat (descriptions will be made below with a network X instead of the first network and a network Y instead of the second network). The whole flow will be described below in combination with at least one specific embodiment, and the flow includes the following steps.

At step A, an IM terminal, which is equivalent to the abovementioned first terminal, in the network X initiates a session to an IM terminal, which is equivalent to the abovementioned second terminal, in the network Y.

At step A.1, before this step, a source IM terminal, which is equivalent to the abovementioned first terminal, initiates capability negotiation to a destination IM terminal, which is equivalent to the abovementioned second terminal. If the destination IM terminal does not support a one-to-one chat capability, the source IM terminal performs failure processing. For example, the source IM terminal feeds back a failure prompt to a worker of the source IM terminal or sends a message to the destination IM terminal in a short message manner.

At step A.2, if a session between the IM terminal in the network X and the IM terminal in the network Y has been created, step D is executed.

At step A.3, if the network X adopts a one-to-one chat in a session-free mode, step C is executed.

At step B, an IM server in the network X executes a flow of creating a session by the source IM terminal.

The IM terminal in the network X contains a first chat message content in the message for creating the session.

At step C, the IM terminal in the network X sends a chat message to the IM server in the network X.

The IM server in the network X provides a caching mechanism to cache chat content, and then sends the chat content to an IM server in the network Y at a proper opportunity.

At step D, the IM server in the network X initiates session creation to the IM server in the network Y.

If the network Y adopts the one-to-one chat in the session-free mode, or the session between the IM server in the network Y and the destination IM terminal in the network Y has been created, step F is executed.

At step E, after the IM server in the network Y receives a session creation request, the IM server in the network Y executes a flow of initiating session creation to the destination IM terminal. In case of a failure, a reply is created to notify the source IM terminal through the IM server in the network X.

At step F, the IM server in the network X establishes a mapping relationship between the source terminal and the destination terminal.

According to chat service types of the network X and the network Y, the mapping relationship is divided into four types:
a session-terminal mapping,
a session-session mapping,
a terminal-session mapping and
a terminal-terminal mapping.

Such a mapping operation is also executed in a stage of the steps B and C and the like.

At step G, the IM server in the network X sends at least one chat message to the IM terminal in the network Y

The IM server in the network X sends the at least one chat message to the IM server in the network Y, and then the IM server in the network Y sends the at least one chat message to the IM terminal in the network Y The IM server in the network Y provides a message caching function.

At step H, in a process of using a chat service, the source IM terminal and the destination IM terminal, besides sending text message contents to each other, further transmits reply notifications and files such as pictures, videos and audios.

Fig. 2 is a flowchart of a second message sending method according to an embodiment of the present invention. According to at least one embodiment as shown in Fig. 2, the flow includes the following steps.

At Step S202, a group chat server or conference server in a first network receives a request message used for requesting to recreate a group chat session from one terminal in a group.

At Step S204, the group chat server or the conference server sends a notification message to other group chat members in the group according to the request message. The notification message is used for notifying the other group chat members in the group to recreate the group chat session.

The one terminal in the group is a terminal in the first network, and is also a terminal in the second network. By the steps, when the request message is sent, the group chat members are located in different networks, so that terminals in the different networks are involved, and a message transmission between the different networks is required. The different networks are RCS networks supporting different specifications. For example, the first network supports a SIMPLE IM specification, and the second network supports a CPM specification. Therefore, intercommunication between different specifications is effectively implemented, the problem of incomplete intercommunication rules between the SIMPLE IM specification and the CPM specification in the related art is solved, and an effect of improving the intercommunication rules between the SIMPLE IM specification and the CPM specification is further achieved.

In an exemplary embodiment, the step that the group chat server or the conference server sends the notification message to the other group chat members in the group according to the request message includes that: when the other group chat members include a terminal in a second network, the group chat server or the conference server sends the notification message to a second server in the second network, and the notification message is, by the second server, sent to the terminal in the second network. Thus it can be seen that, when the notification message is required to be sent to a terminal in another network, the notification message is sent to a server in the other network and then sent, by the server of the other network, to the terminal in the other network.

When the first network adopts a conference-based group chat mode, the conference server in the first network receives the request message sent by the terminal in the group. And when the first network adopts a conference-free group chat mode, the group chat server in the first network receives the request message sent by the terminal in the group.

In an exemplary embodiment, the step that the group chat server or conference server in the first network receives the request message sent by the terminal in the group includes that: when the terminal in the group is a terminal in the first network, the group chat server or the conference server receives the request message sent by the terminal in the group. And when the terminal in the group is a terminal in the second network, the group chat server or the conference server receives the request message sent by the terminal in the group in a manner of receiving the request message sent by the second server in the second network.

In an exemplary embodiment, the first network and the second network are RCS networks supporting different specifications.

From the above, it can be seen that the abovementioned embodiments mainly involve group chat service (descriptions will be made below with a network X instead of the first network and a network Y instead of the second network or the other network). The whole flow will be described below in combination with a specific embodiment, and the flow includes the following steps.

### Group chat (from the network X to the network Y)

At step A, an IM terminal in the network X initiates a request to a group chat server in the network X and the request is used for creating a group.

A member list contained in the message includes part of the group chat members, and new members are further added anytime in a group chat process.

At step B, the IM server in the network X sends an invitation of joining the group to other group members.

At step B.1, the network X adopts a conference-based group chat mode, the network X allocates a conference to the group chat, and a conference server sends the invitation to the other member groups.

At step B.2, the network X adopts a conference-free group chat mode, and the group chat server directly sends the invitation to the other group members.

At step C, the network X finds that a member in the group chat is in the network Y when the group chat invitation is sent.

The IM server in the network X sends an invitation message to an IM server in the network Y, and the IM server in the network Y sends the invitation message to the IM terminal in the network X.

At step D, an IM terminal in the group initiates session recreation.

At step D.1, the group chat of the network where a group administrator is located has a conference.

The IM terminal sends a session recreation request to the conference server. If the conference server is in a different network, the IM terminal sends the session recreation request to the IM server in a local network and then the IM server in the local network sends the recreation request to the IM server in the different network. The conference server sends a notification message to the other members in the group.

At step D.2, the group chat of the network where the group administrator is located has no conference.

The IM terminal sends the session recreation request to the group chat server.

The group chat server determines whether the group administrator is in the local network or the different network according to group chat information contained in the session recreation request.

At step D.2.1, if the group administrator is in the local network, the group chat server in the local network directly sends the notification message to the other members in the group.

At step D.2.2, if the group administrator is in the different network, the session recreation request is sent to the IM server in the different network, and the group chat server in the different network sends a notification to the other members in the group.

At step E, a group administration message is sent to the conference server by the IM terminal in the conference-based group chat mode, and is sent to the group chat server by the IM terminal in the conference-free group chat mode.

At step F, a group notification message is sent to group member IM terminals by the conference server in the conference-based group chat mode, and is sent to the group member IM terminals by the group chat server in the conference-free group chat mode.

In the group chat process, not only text message contents are sent, but also transmission of files such as videos, pictures and audios is initiated.

From the above descriptions about implementation modes, those skilled in the art clearly knows that the methods according to the at least some abovementioned embodiments are implemented in a manner of combining software and a necessary universal hardware platform, and of course, are also implemented through hardware, but the former is an exemplary implementation mode under many circumstances. Based on such an understanding, the technical solutions of the present invention substantially or parts making contributions to a conventional art are embodied in form of software product, and the computer software product is stored in a storage medium (for example, a Read-Only Memory (ROM)/Random Access Memory (RAM), a magnetic disk and an optical disk, including various instructions used for enabling one terminal device (which is a mobile phone, a computer, a server, network equipment or the like) to execute the method of each embodiment of the present invention.

Another embodiment further provides a message sending device, which is arranged to implement at least some abovementioned embodiments and exemplary implementation modes, and what has been described will not be elaborated. For example, term "component", used below, is a combination of software and/or hardware capable of realizing a preset function. Although the device described in the following embodiment is implemented with software, implementation with hardware or a combination of the software and the hardware is also possible and conceivable.

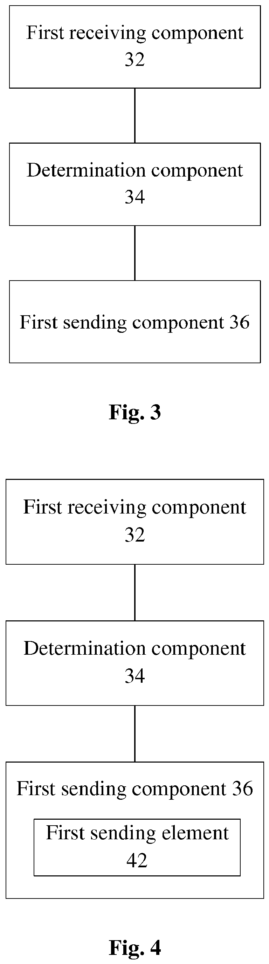

Fig. 3 is a structural block diagram of a first message sending device according to an embodiment of the present invention. The device is applied to a first server of a first network. According to at least one embodiment as shown in Fig. 3, the device includes a first receiving component 32, a determination component 34 and a first sending component 36. The device will be described below.

The first receiving component 32 is arranged to receive at least one message sent by a first terminal in the first network, and the message is sent to a second terminal, and the second terminal is located in a second network. The determination component 34 is connected with the first receiving component 32 and arranged to determine a mapping relationship between the first terminal and the second terminal, and the mapping relationship includes mapping from at least one service type supported by the first network to at least one service type supported by the second network. And the first sending component 36 is connected with the determination component 34 and arranged to send the at least one message to the second terminal according to the determined mapping relationship.

The mapping relationship includes at least one of: a session-terminal mapping, a session-session mapping, a terminal-session mapping and a terminal-terminal mapping.

Fig. 4 is a structural block diagram of a first sending component 36 in a first message sending device according to an embodiment of the present invention. According to at least one embodiment as shown in Fig. 4, the first sending component 36 includes a first sending element 42. The first sending component 36 will be described below.

The first sending element 42 is arranged to send the at least one message to a second server in the second network according to the mapping relationship, and the message is sent, by the second server, to the second terminal.

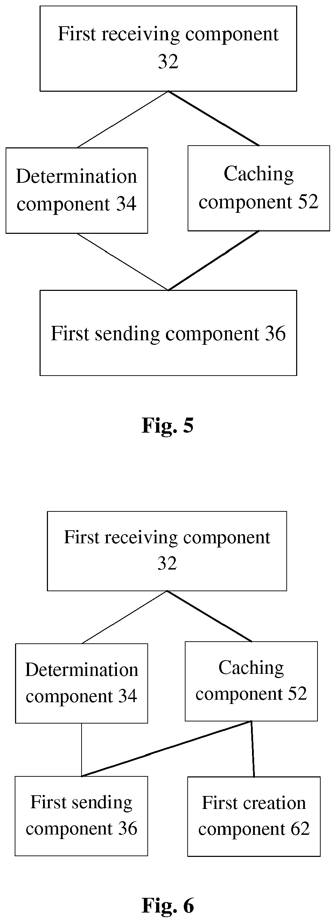

Fig. 5 is a structural block diagram of a first message sending device according to a first exemplary embodiment of the present invention. According to at least one embodiment as shown in Fig. 5, the device further includes a caching component 52, besides all the components shown in Fig. 3. The device will be described below.

The caching component 52 is connected with the first receiving component 32 and the first sending component 36, and arranged to cache the at least one message.

Fig. 6 is a structural block diagram of a first message sending device according to a second exemplary embodiment of the present invention. According to at least one embodiment as shown in Fig. 6, the device further includes a first creation component 62, besides all the components shown in Fig. 5. The device will be described below.

The first creation component 62 is connected with the caching component 52, and is arranged to create a session between the first server and the first terminal in a manner of negotiation with the first terminal.

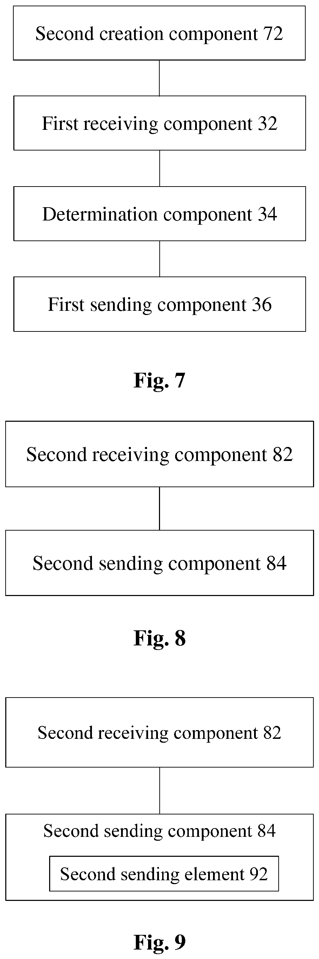

Fig. 7 is a structural block diagram of a first message sending device according to a third exemplary embodiment of the present invention. According to at least one embodiment as shown in Fig. 7, the device further includes a second creation component 72, besides all the components shown in Fig. 3. The device will be described below.

The second creation component 72 is connected with the first receiving component 32, and is arranged to create the session between the first server and the first terminal in the manner of negotiation with the first terminal.

In an exemplary embodiment, the first network and the second network are RCS networks supporting different specifications.

Fig. 8 is a structural block diagram of a second message sending device according to an embodiment of the present invention. The device is applied to a group chat server or conference server in a first network. According to at least one embodiment as shown in Fig. 8, the device includes a second receiving component 82 and a second sending component 84. The device will be described below.

The second receiving component 82 is arranged to receive a request message for requesting to recreate a group chat session from one terminal in a group. The second sending component 84 is connected with the second receiving component 82, and is arranged to send a notification message to other group chat members in the group according to the request message. The notification message is used for notifying the other group chat members in the group to recreate the group chat session.

Fig. 9 is a structural block diagram of a second sending component 84 in a second message sending device according to an embodiment of the present invention. According to at least one embodiment as shown in Fig. 9, the second sending component 84 includes a second sending element 92. The second sending component 84 will be described below.

The second sending element 92 is arranged to, when the other group chat members include a terminal in a second network, send the notification message to a second server in the second network. The notification message is sent, by the second server, to the terminal in the second network.

In an exemplary embodiment, when the first network adopts a conference-based group chat mode, the conference server in the first network receives the request message sent by the terminal in the group. And when the first network adopts a conference-free group chat mode, the group chat server in the first network receives the request message sent by the terminal in the group.

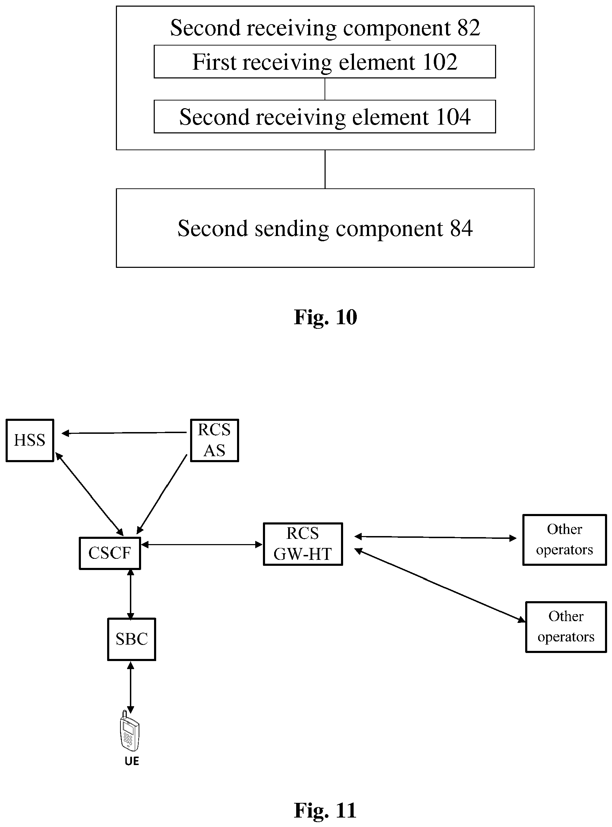

Fig. 10 is a structural block diagram of a second receiving component 82 in a second message sending device according to an embodiment of the present invention. According to at least one as shown in Fig. 10, the second receiving component 82 includes a first receiving element 102 and a second receiving element 104. The second receiving component 82 will be described below.

The first receiving element 102 is arranged to, when the terminal in the group is a terminal in the first network, receive the request message sent by the terminal in the group. The second receiving element 104 is arranged to, when the terminal in the group is a terminal in the second network, receive the request message sent by the terminal in the group in a manner of receiving the request message sent by the second server in the second network.

From at least some abovementioned embodiments, it can be seen that the present invention implements interconnection and intercommunication of a message service between two RCS networks, including a one-to-one chat service and a group chat service, and supports file transmission during a one-to-one chat and a group chat. The one-to-one chat is divided into a session mode (for example, a Chat mode of RCS) and a session-free mode (for example, Pager and Large modes of RCS), and the group chat is divided into a conference-based mode (for example, a group chat of a CPM specification) and a conference-free mode (for example, a group chat of a SIMPLE specification). A specific RCS network interconnection and intercommunication networking diagram refers to Fig. 11. Fig. 11 is an intercommunication networking diagram of RCS networks according to an embodiment of the present invention.

The one-to-one chat in the SIMPLE IM specification mainly adopts the Chat mode, and the one-to-one chat in the CPM specification mainly adopts the Pager and Large modes.

### Embodiment One

This embodiment of the present invention is a specific implementation mode about intercommunication of one-to-one chat service and provides a chat flowchart from a Large mode to a Chat mode. The flow will be described below, and the flow includes the following steps.

At step A, a source IM terminal sends a SIP INVITE request to an IM server of a source network, and a Session Description Protocol (SDP) in a message contains Message Session Relay Protocol (MSRP) client link information.

At step B, the IM server in the source network returns a success Acknowledgement (ACK) to the source IM terminal, and an SDP in a message contains MSRP server link information.

At step C, the source IM terminal creates an MSRP link to the IM server of the source network, and sends a SIP ACK message to indicate that a session is successfully created.

At step D, the source IM terminal sends a chat content to the IM server in the source network through the MSRP link.

At step E, the IM server in the source network receives and caches the chat content, and then sends a BYE message to the source IM terminal to end the session.

At step F, the IM server in the source network sends a SIP INVITE request to an IM server of a destination network, and contains MSRP client link information through an SDP part in a message.

At step G, the IM server in the destination network returns a success ACK, and contains MSRP server link information through an SDP part in a message.

At step H, the IM server in the source network initiates a flow of creating an MSRP link to the IM server in the destination network. After the link is successfully created, the IM server of the destination network sends a SIP ACK message to the IM server of the destination network to indicate that a session is successfully created.

If the session is failed to be created, the IM server in the source network sends a failure reply notification to the source IM terminal.

At step I, the IM server in the source network sends a message content to the IM server in the destination network through the MSRP link.

At step J, the IM server in the destination network sends a SIP INVITE message to a destination IM terminal, and an SDP in the message contains MSRP client link information.

At step K, the destination IM terminal returns a success ACK to the IM server in the destination network, and an SDP in a message contains MSRP server link information.

At step L, the IM server in the destination network creates an MSRP link to the destination IM terminal, and sends a SIP ACK message to indicate that a session is successfully created.

At step M, the IM server in the destination network sends the chat content to the destination IM terminal through the MSRP link.

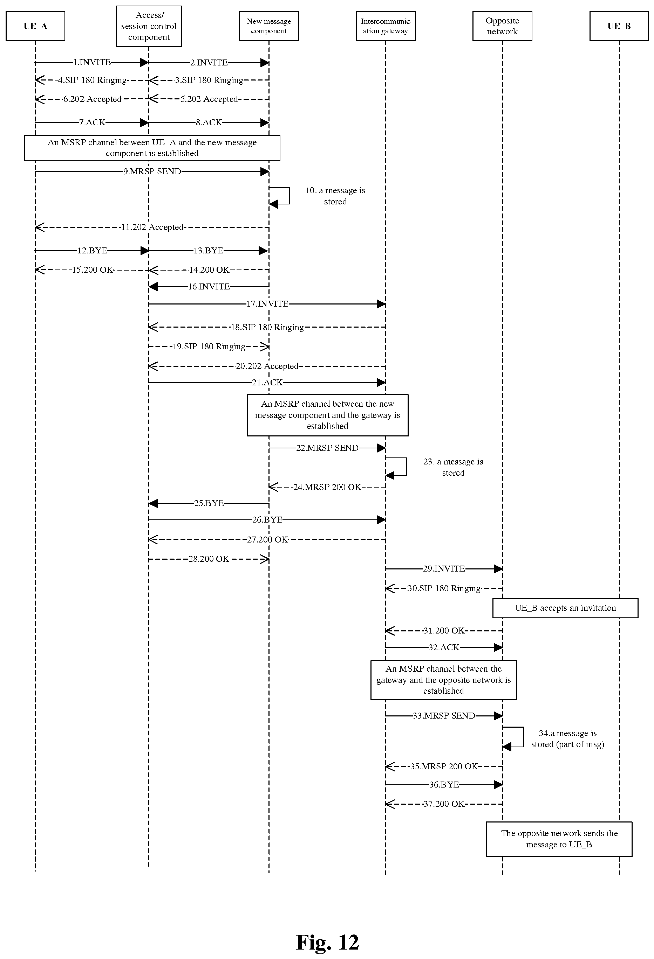

Fig. 12 shows an example of a chat flow from a Large mode to a Chat mode. Fig. 12 is a chat flowchart from a Large mode to a Chat mode according to an embodiment of the present invention. According to at least one embodiment as shown in Fig. 12, User Equipment-A (UE-A) is a source terminal, two components exist in an IM server of the source network: an access/session control component and a new message component, and of course, the two components are also arranged in different servers. UE-B is a destination terminal, and the IM server in the destination network includes an intercommunication gateway and an opposite network. According to at least one embodiment as shown in Fig. 12, the flow includes the following steps.

At step 1, the UE-A sends an INVITE message to the access/session control component.

At step 2, the access/session control component sends the INVITE message to the new message component.

At step 3, the new message component returns a SIP 180 Ringing message to the access/session control component.

At step 4, the access/session control component returns the SIP 180 Ringing message to the UE-A.

At step 5, the new message component returns a 202 Accepted message to the access/session control component.

At step 6, the access/session control component returns the 202 Accepted message to the UE-A.

At step 7, the UE-A sends an ACK message to the access/session control component.

At step 8, the access/session control component sends the ACK message to the new message component. An MSRP channel between the UE-A and the new message component is established by Steps 7 and 8.

At step 9, the UE-A sends a chat content to the new message component through an established link. That is, the UE-A sends an MSRP SEND message to the new message component.

At step 10, the new message component stores a chat message sent by the UE-A.

At step 11, the new message component feeds back an accepted message, i.e. the 202 Accepted message, to the UE-A.

At step 12, the UE-A sends a BYE message to the access/session control component.

At step 13, the access/session control component sends the BYE message to the new message component.

At step 14, the new message component sends a 200 OK message to the access/session control component.

At step 15, the access/session control component sends the 200 OK message to the UE-A.

At step 16, when intercommunication with a terminal in another network is required, the new message component is required to send an INVITE message to the access/session control component.

At step 17, the access/session control component sends the INVITE message to the intercommunication gateway.

At step 18, the intercommunication gateway returns a SIP 180 Ringing message to the access/session control component.

At step 19, the access/session control component returns the SIP 180 Ringing message to the new message component.

At step 20, the intercommunication gateway sends a 202 Accepted message to the access/session control component.

At step 21, the access/session control component sends an ACK message to the intercommunication gateway, and an MSRP channel is established between the new message component and the intercommunication gateway.

At step 22, the new message component sends a chat message (the chat message is a pre-cached message sent by the UE-A) to the intercommunication gateway, that is, an MSRP SEND message is sent to the intercommunication gateway.

At step 23, after receiving the chat message, the intercommunication gateway stores the chat message, and sends the chat message when necessary.

At step 24, the intercommunication gateway feeds back a confirmation message, i.e. an MSRP 200 OK message, to the new message component.

At step 25, the new message component sends a BYE message to the access/session control component.

At step 26, the access/session control component sends the BYE message to the intercommunication gateway.

At step 27, the intercommunication gateway sends a confirmation message, i.e. a 200 OK message, to the access/session control component.

At step 28, the access/session control component sends the confirmation message, i.e. the 200 OK message, to the new message component.

At step 29, the intercommunication gateway sends an invitation message, i.e. an INVITE message, to the opposite network.

At step 30, the opposite network feeds back a SIP 180 Ringing message to the intercommunication gateway.

At step 31, the opposite network feeds back a confirmation message, i.e. a 200 OK message, to the intercommunication gateway.

At step 32, the intercommunication gateway sends an ACK message to the opposite network, and an MSRP channel between the intercommunication gateway and the opposite network is established.

At step 33, the intercommunication gateway sends the stored chat message, i.e. the MSRP SEND message, to the opposite network.

At step 34, after receiving the chat message, the opposite network stores the chat message, and sends the message to the UE-B when necessary.

At step 35, the opposite network sends an MSRP 200 OK message to the intercommunication gateway.

At step 36, the intercommunication gateway sends a BYE message to the opposite network.

At step 37, the opposite network feeds back a confirmation message, i.e. a 200 OK message, to the intercommunication gateway.

### Embodiment Two

A chat flow from a Pager mode to a Chat mode is described in this embodiment, and the flow includes the following steps.

At step A, a source IM terminal sends a SIP MESSAGE request to an IM server in a source network.

At step B, the IM server in the source network receives and caches a chat content, and returns a success ACK to the source IM terminal.

At step C, the IM server in the source network sends a SIP INVITE request to an IM server in a destination network, and contains MSRP client link information through an SDP part in a message.

At step D, the IM server in the destination network returns a success ACK, and contains MSRP server link information through an SDP part in a message.

At step E, the IM server in the source network initiates a flow of creating an MSRP link to the IM server of the destination network, and after the link is successfully created, sends a SIP ACK message to the IM server of the destination network to indicate that a session is successfully created. If the session is failed to be created, the IM server in the source network sends a failure reply notification to the source IM terminal.

At step F, the IM server in the source network sends a message content to the IM server in the destination network through the MSRP link.

At step G, the IM server in the destination network sends a SIP INVITE message to a destination IM terminal, and an SDP in the message contains MSRP client link information.

At step H, the destination IM terminal returns a success ACK to the IM server in the destination network, and an SDP in a message contains MSRP server link information.

At step I, the IM server in the destination network creates an MSRP link to the destination IM terminal, and sends a SIP ACK message to indicate that a session is successfully created.

At step J, the IM server in the destination network sends the chat content to the destination IM terminal through the MSRP link.

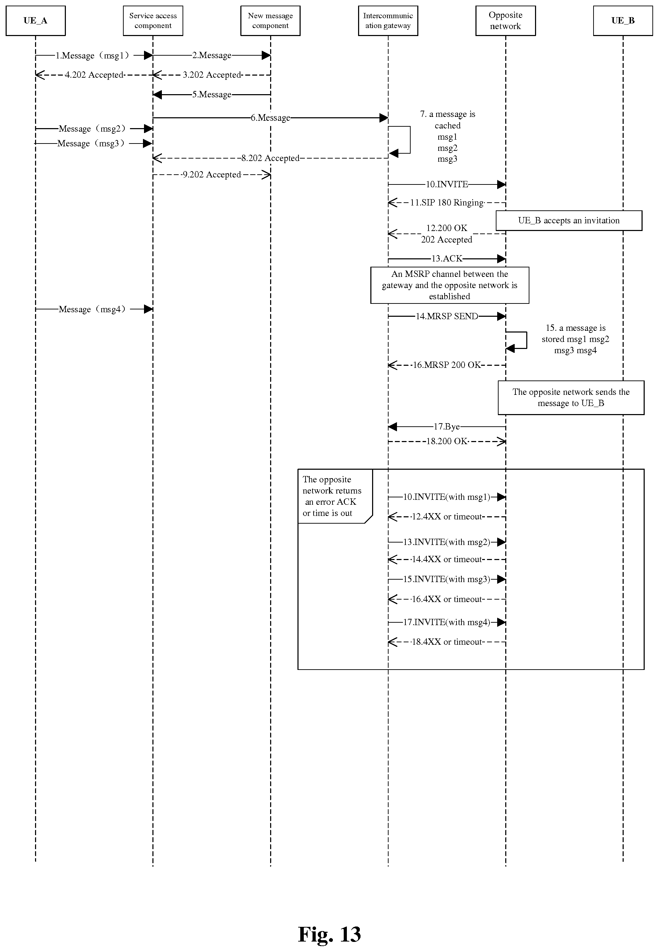

Fig. 13 shows an example of the chat flow from the Pager mode to the Chat mode. Fig. 13 is a chat flowchart from a Pager mode to a Chat mode according to an embodiment of the present invention. According to at least one embodiment as shown in Fig. 13, UE-A is a source terminal, two components exist in the IM server of the source network: a service access component and a new message component, and of course, the two components are also arranged in different servers. UE-B is a destination terminal, and the IM server in the destination network includes an intercommunication gateway and an opposite network. The flow may include the following steps.

At step 1, the UE-A sends a message (msg1) to the service access component, and of course, the UE-A further sends another message (for example, msg2 and msg3) to the service access component.

At step 2, the service access component sends the received message to the new message component.

At step 3, the new message component feeds back a reception determination message, i.e. a 202 Accepted message, to the service access component.

At step 4, the service access component feeds back the 202 Accepted message to the UE-A.

At step 5, the new message component sends a message to the service access component.

At step 6, the service access component sends the message to the intercommunication gateway.

At step 7, after receiving the message, the intercommunication gateway caches the message, and sends the message when necessary.

At step 8, the intercommunication gateway feeds back an accepted message, i.e. a 202 Accepted message, to the service access component.

At step 9, the service access component sends the 202 Accepted message to the new message component.

At step 10, the intercommunication gateway sends an invitation message, i.e. an INVITE message, to the opposite network.

At step 11, the opposite network sends a SIP 18 Ringing message to the intercommunication gateway.

At step 12, the opposite network feeds back a 200 OK message and a 202 Accepted message to the intercommunication gateway.

At step 13, the intercommunication gateway sends an ACK message to the opposite network.

At step 14, after an MSRP channel is established between the intercommunication gateway and the opposite network, the intercommunication gateway sends a cached message to the opposite network through the established MSRP channel. That is, an MSRP SEND message is sent.

At step 15, after receiving the message sent by the intercommunication gateway, the opposite network stores the message.

At step 16, the opposite network feeds back a confirmation messages, i.e. an MSRP 200 OK message, to the intercommunication gateway.

At step 17, the opposite network sends the cached message to the UE-B, and moreover, the opposite network feeds back a BYE message to the intercommunication gateway.

At step 18, the intercommunication gateway feeds back a confirmation message, i.e. a 200 OK message, to the opposite network.

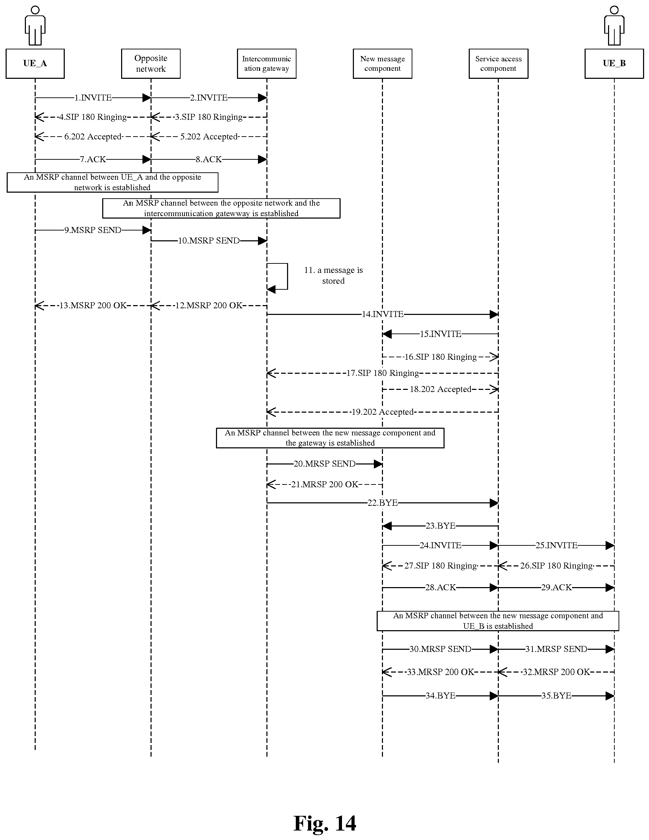

When the opposite network returns an error ACK or time is out, the intercommunication gateway performs information interaction with the opposite network, specifically referring to Steps 19-26 in Fig. 14.

### Embodiment Three

A chat flow from a Chat mode to a Large mode is described in this embodiment, and the flow includes the following steps.

At step A, a source IM terminal sends a SIP INVITE request to an IM server of a source network, an SDP of a message containing MSRP client link information.

At step B, the IM server of the source network returns a success ACK to the source IM terminal, and an SDP in a message contains MSRP server link information.

At step C, the source IM terminal creates an MSRP link to the IM server of the source network, and sends a SIP ACK message to indicate that a session is successfully created.

At step D, the source IM terminal sends a chat content to the IM server in the source network through the MSRP link.

At step E, the IM server in the source network sends a SIP INVITE request to an IM server in a destination server, and contains MSRP client link information through an SDP part in a message.

At step F, the IM server in the destination network returns a success ACK, and contains MSRP server link information through an SDP part in a message.

At step G, the IM server in the source network initiates a flow of creating an MSRP link to the IM server in the destination network, and after the link is successfully created, sends a SIP ACK message to the IM server in the destination network to indicate that a session is successfully created. If the session is failed to be created, the IM server in the source network sends a failure reply notification to the source IM terminal.

At step H, the IM server in the source network sends a message content to the IM server in the destination network through the MSRP link.

At step I, the IM server in the destination network sends a SIP INVITE message to a destination IM terminal, and an SDP in the message contains MSRP client link information.

At step J, the destination IM terminal returns a success ACK to the IM server in the destination network, and an SDP in a message contains MSRP server link information.

At step K, the IM server in the destination network creates an MSRP link to the destination IM terminal, and sends a SIP ACK message to indicate that a session is successfully created.

At step L, the IM server in the destination network sends the chat content to the destination IM terminal through the MSRP link.

At step M, the IM server in the destination network sends a SIP BYE message to the destination IM terminal to end the session.

Fig. 14 shows an example of a chat flow from a Chat mode to a Large mode. Fig. 14 is a chat flowchart from a Chat mode to a Large mode according to an embodiment of the present invention. According to at least one embodiment as shown in Fig. 14, UE-A is a source terminal, the IM server in the source network includes an opposite network and an intercommunication gateway, UE-B is a destination terminal. Two components exist in the IM server in the destination network: a new message component and a service access component, and of course, the two components are also arranged in different servers. The flow includes the following steps.

At step 1, the UE-A sends an INVITE message to an opposite network.

At step 2, the opposite network sends the INVITE message to the intercommunication gateway.

At step 3, the intercommunication gateway returns a SIP 180 Ringing message to the opposite network.

At step 4, the opposite network returns the SIP 180 Ringing message to the UE-A.

At step 5, the intercommunication gateway returns a 202 Accepted message to the opposite network.

At step 6, the opposite network returns the 202 Accepted message to the UE-A.

At step 7, the UE-A sends an ACK message to the opposite network.

At step 8, the opposite network sends the ACK message to the intercommunication gateway. By Steps 7 and 8, an MSRP channel between the UE-A and the opposite network is established, and an MSRP channel between the opposite network and the intercommunication gateway is established.

At step 9, the UE-A sends a chat content to the opposite network through the established MSRP channel. That is, the UE-A sends an MSRP SEND message to the opposite network.

At step 10, the opposite network sends an MSRP SEND message to the intercommunication gateway.

At step 11, the intercommunication gateway stores a chat message sent by the UE-A.

At step 12, the intercommunication gateway feeds back a confirmation message, i.e. an MSRP 200 OK message, to the opposite network.

At step 13, the opposite network sends the MSRP 200 OK message to the UE-A.

At step 14, when intercommunication with a terminal in another network is required, the intercommunication gateway is required to send an INVITE message to the service access component.

At step 15, the service access component sends the INVITE message to the new message component.

At step 16, the new message component returns a SIP 180 Ringing message to the service access component.

At step 17, the service access component returns the SIP 180 Ringing message to the intercommunication gateway.

At step 18, the new message component sends a 202 Accepted message to the service access component.

At step 19, the service access component sends the 202 Accepted message to the intercommunication gateway, and an MSRP channel is established between the new message component and the intercommunication gateway.

At step 20, the intercommunication gateway sends a chat message (the chat message is a pre-cached message sent by the UE-A) to the new message component, that is, an MSRP SEND message is sent to the new message component.

At step 21, after receiving the chat message, the new message component feeds back a confirmation message, i.e. an MSRP 200 OK message, to the intercommunication gateway.

At step 22, the intercommunication gateway feeds back a BYE message to the service access component.

At step 23, the service access component sends the BYE message to the new message component.

At step 24, the new message component sends an INVITE message to the service access component.

At step 25, the service access component sends the INVITE message to the UE-B.

At step 26, the UE-B feeds back a SIP 180 Ringing message to the service access component.

At step 27, the service access component sends the SIP 180 Ringing message to the new message component.

At step 28, the new message component sends an ACK message to the service access component.

At step 29, the service access component sends the ACK message to the UE-B.

At step 30, after an MSRP channel between the new message component and the UE-B is established, the new message component sends an MSRP SEND message to the service access component.

At step 31, the service access component sends the MSRP SEND message to the UE-B.

At step 32, the UE-B feeds back a confirmation message, i.e. an MSRP 200 OK message, to the service access component.

At step 33, the service access component sends the MSRP 200 OK message to the new message component.

At step 34, the new message component sends a BYE message to the service access component.

At step 35, the service access component sends the BYE message to the UE-B.

### Embodiment Four

A chat flowchart from a Chat mode to a Pager mode is described in this embodiment, and the flow includes the following steps.

At step A, a source IM terminal sends a SIP INVITE request to an IM server in a source network, and an SDP of a message contains MSRP client link information.

At step B, the IM server in the source network returns a success ACK to the source IM terminal, and an SDP in a message contains MSRP server link information.

At step C, the source IM terminal creates an MSRP link to the IM server in the source network, and sends a SIP ACK message to indicate that a session is successfully created.

At step D, the source IM terminal sends a chat content to the IM server in the source network through the MSRP link.

At step E, the IM server in the source network sends a SIP INVITE request to an IM server in a destination server, and contains MSRP client link information through an SDP part in a message.

At step F, the IM server in the destination network returns a success ACK, and contains MSRP server link information through an SDP part in a message.

At step G, the IM server in the source network initiates a flow of creating an MSRP link to the IM server in the destination network, and after the link is successfully created, sends a SIP ACK message to the IM server in the destination network to indicate that a session is successfully created. If the session is failed to be created, the IM server in the source network sends a failure reply notification to the source IM terminal.

At step H, the IM server in the source network sends a message content to the IM server in the destination network through the MSRP link.

At step I, the IM server in the destination network sends a SIP MESSAGE to a destination IM terminal, and the chat content is contained.

At step J, the destination IM terminal returns a success ACK to the IM server of the destination network.

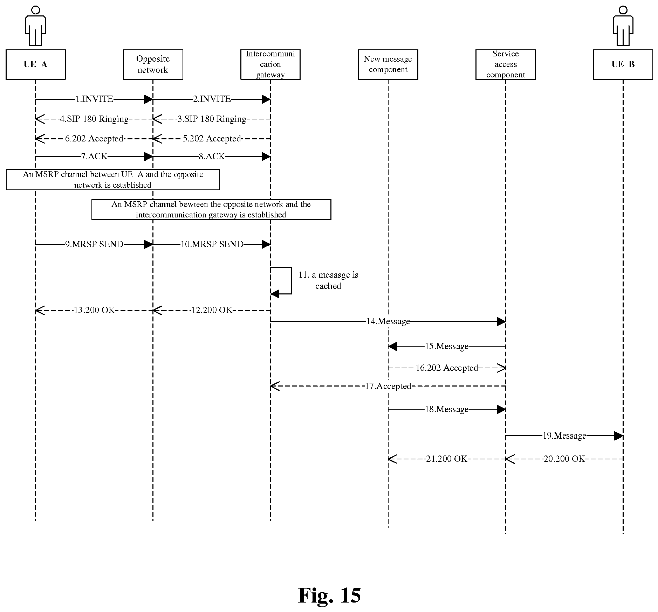

Fig. 15 shows an example of a chat flow from a Chat mode to a Pager mode. Fig. 15 is a chat flowchart from a Chat mode to a Pager mode according to an embodiment of the present invention. According to at least one embodiment as shown in Fig. 15, UE-A is a source terminal, the IM server in the source network includes an opposite network and an intercommunication gateway, UE-B is a destination terminal. Two components exist in the IM server in the destination network: a new message component and a service access component, and of course, the two components are also arranged in different servers. The flow may include the following steps.

At step 1, the UE-A sends an INVITE message to an opposite network.

At step 2, the opposite network sends the INVITE message to the intercommunication gateway.

At step 3, the intercommunication gateway returns a SIP 180 Ringing message to the opposite network.

At step 4, the opposite network returns the SIP 180 Ringing message to the UE-A.

At step 5, the intercommunication gateway returns a 202 Accepted message to the opposite network.

At step 6, the opposite network returns the 202 Accepted message to the UE-A.

At step 7, the UE-A sends an ACK message to the opposite network.

At step 8, the opposite network sends the ACK message to the intercommunication gateway. By Steps 7 and 8, an MSRP channel between the UE-A and the opposite network is established, and an MSRP channel between the opposite network and the intercommunication gateway is established.

At step 9, the UE-A sends a chat content to the opposite network through the established MSRP channel. That is, the UE-A sends an MSRP SEND message to the opposite network.

At step 10, the opposite network sends an MSRP SEND message to the intercommunication gateway.

At step 11, the intercommunication gateway stores a chat message sent by the UE-A.

At step 12, the intercommunication gateway feeds back a confirmation message, i.e. a 200 OK message, to the opposite network.

At step 13, the opposite network sends the 200 OK message to the UE-A.

At step 14, the intercommunication gateway sends a message to the service access component.

At step 15, the service access component sends the message to the new message component.

At step 16, the new message component returns a 202 Accepted message to the service access component.

At step 17, the service access component sends the Accepted message to the intercommunication gateway.

At step 18, the new message component sends a message to the service access component.

At step 19, the service access component sends the message to the UE-B.

At step 20, the UE-B feeds back a confirmation message, i.e. a 200 OK message, to the service access component.

At step 21, the service access component sends the 200 OK message to the new message component.

### Embodiment Five

A group chat in a SIMPLE IM specification does not involve a concept of a conference, and a group chat in a CPM specification involves the concept of the conference.

An intercommunication flow of a group chat is described in this embodiment, and the flow includes the following steps.

When a group chat of a CPM network includes a terminal in a SIMPLE network, the flow includes the following steps.

At step A, a source IM terminal sends a SIP INVITE request to an IM server in a source network, and a number of a group chat server is determined as a called number, an SDP in a message contains MSRP client link information and a resource-list contains numbers of other group members.

At step B, the IM server in the source network returns a success ACK to the source IM terminal, and a message contains an Identifier (ID) of a conference of the source network and the like.

At step C, the source IM terminal creates an MSRP link to a conference server of the source network.

At step D, the conference server in the source network sends a SIP INVITE message to the other group members, and a session is created with the ID of the conference as a calling party. For a group member of a different network, the conference server sends a SIP INVITE message to an IM server in the different network and then the IM server in the different network forwards the SIP INVITE message to a terminal of the different network.

At step E, an IM terminal in a destination network receives the SIP INVITE message for invitation in a group, returns a success ACK and creates an MSRP link.

At step F, when being required to recreate a group session, the IM terminal in the destination network sends the SIP INVITE message to an IM server in a destination network, and the ID of the conference is determined as a called party.

At step G, the IM server in the destination network forwards a group session recreation message to the conference server in the source network to recreate a SIP session.

At step H, the IM terminal in the destination network recreates an MSRP link of the session.

At step I, the conference server sends a notification message to another member in the group.

When a group chat of the SIMPLE network includes a terminal of the CPM network, the flow includes the following steps.

At step A, a source IM terminal sends a SIP INVITE request to an IM server in a source network, and a number of a group chat server is determined as a called number, an SDP in a message contains MSRP client link information and a resource-list contains numbers of other group members.

At step B, the IM server in the source network returns a success ACK to the source IM terminal.

At step C, the source IM terminal creates an MSRP link to a group chat server in the source network.

At step D, the group chat server in the source network sends a SIP INVITE message to the other group members, and a session is created with an ID of a group administrator as a calling party.

At step E, an IM terminal in a destination network receives the SIP INVITE message for invitation in a group, returns a success ACK and creates an MSRP link.

At step F, when being required to recreate a group session, the IM terminal in the destination network sends the SIP INVITE message to a group chat server in the destination network, and the number of the group administrator is determined as a called party.

At step G, the group chat server in the destination network forwards a session recreation message to the group chat server in the source network to recreate a SIP session.

At step H, the IM terminal in the destination network recreates an MSRP link of the session.

At step I, the group chat server in the source network sends a notification message to another member in the group.

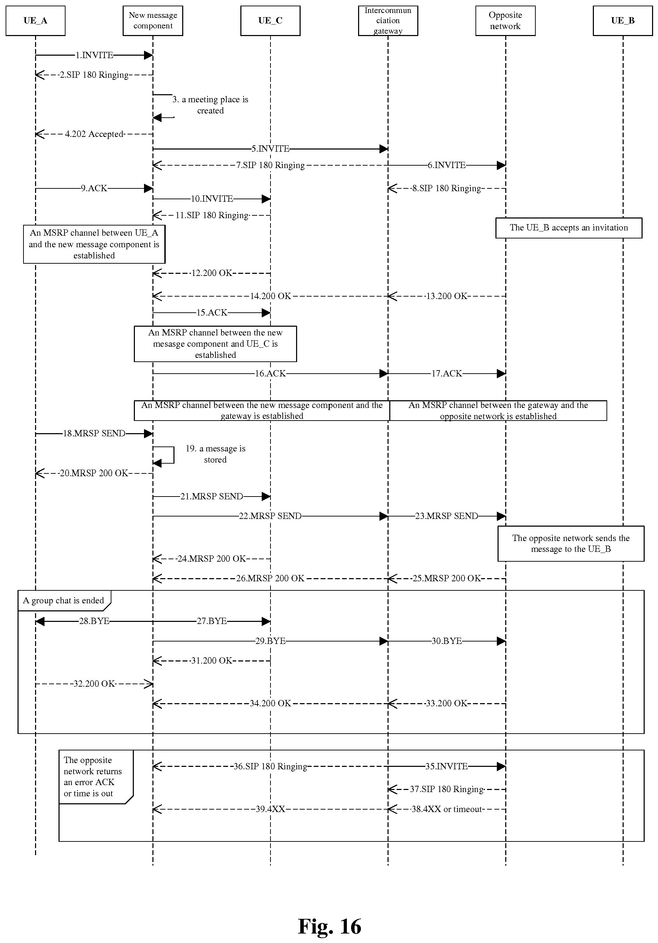

Fig. 16 shows an example of an intercommunication flow of a group chat service. Fig. 16 is an intercommunication flowchart of a group chat service according to an embodiment of the present invention. According to at least one embodiment as shown in Fig. 16, UE-A is a source terminal, the IM server in the source network includes a new message component, UE-B and UE-C are members in a group, and a server in a network where the UE-B is located includes an intercommunication gateway and an opposite network. The flow includes the following steps.

At step 1, the UE-A sends an INVITE message to the new message component.

At step 2, the new message component feeds back a SIP 180 Ringing message to the UE-A.

At step 3, the new message component creates a conference.

At step 4, the new message component sends a 200 Accepted message to the UE-A.

At step 5, the new message component sends an INVITE message to the intercommunication gateway.

At step 6, the intercommunication gateway sends the INVITE message to the opposite network.

At step 7, the intercommunication gateway feeds back a SIP 180 Ringing message to the new message component.

At step 8, the opposite network feeds back a SIP 180 Ringing message to the intercommunication gateway.

At step 9, the UE-A sends an ACK message to the new message component.

At step 10, the new message component sends an INVITE message to the UE-C.

At step 11, he UE-C feeds back a SIP 180 Ringing message to the new message component.

At step 12, the UE-C feeds back a 200 OK message to the new message component.

At step 13, the opposite network feeds back a 200 OK message to the intercommunication gateway.

At step 14, the intercommunication gateway feeds back a 200 OK message to the new message component.

At step 15, the new message component sends an ACK message to the UE-C, and an MSRP channel between the new message component and the UE-C is established.

At step 16, the new message component sends an ACK message to the intercommunication gateway.

At step 17, the intercommunication gateway sends the ACK message to the opposite network.

At step 18, the UE-A sends a message, i.e. MSRP SEND, to the new message component through an MSRP channel pre-established with the new message component.

At step 19, after receiving the message sent by the UE-A, the new message component stores the message.

At step 20, the new message component feeds back a confirmation message, i.e. MSRP 200 OK, to the UE-A.

At step 21, the new message component sends a message, i.e. an MSRP SEND message, to the UE-C through the MSRP channel pre-established with the new message component.

At step 22, the new message component sends the MSRP SEND message to the intercommunication gateway.

At step 23, the intercommunication gateway sends the MSRP SEND message to the opposite network.

At step 24, the UE-C sends an MSRP 200 OK message to the new message component.

In 25, the opposite network sends an MSRP 200 OK message to the intercommunication gateway.

At step 26, the intercommunication gateway sends the MSRP 200 OK message to the new message component.

After the group chat is ended, operations of Steps 28-34 are executed, including the following operations.

At step 27, the new message component sends a BYE message to the UE-C.

At step 28, the new message component sends a BYE message to the UE-A.

At step 29, the new message component sends a BYE message to the intercommunication gateway.

At step 30, the intercommunication gateway sends the BYE message to the opposite network.

At step 31, the UE-C feeds back a confirmation message, i.e. a 200 OK message, to the new message component.

At step 32, the UE-A feeds back a confirmation message, i.e. a 200 OK message, to the new message component.

At step 33, the opposite network feeds back a confirmation message, i.e. a 200 OK message, to the intercommunication gateway.

At step 34, the intercommunication gateway feeds back a confirmation message, i.e. a 200 OK message, to the new message component.

When the opposite network returns an error ACK or time is out, operations of Steps 36-39 are executed, including the following operations.

At step 35, the intercommunication gateway sends an INVITE message to the opposite network.

At step 36, the intercommunication gateway sends a SIP 180 Ringing message to the new message component.

At step 37, the opposite network feeds back a SIP 180 Ringing message to the intercommunication gateway.

At step 38, the opposite network feeds back a 4XX or timeout message to the intercommunication gateway.

At step 39, the intercommunication gateway feeds back a 4XX message to the new message component.

By the at least some abovementioned embodiments of the present invention, interconnection and intercommunication of a message service between two RCS networks, i.e. intercommunication of different one-to-one chat services and intercommunication of different group chat services under different RCS networks, is implemented, and a file transmission function under a message type service is supported.

It is important to note that each of the abovementioned components is implemented through software or hardware, and the latter condition is implemented in, but not limited to, the following manner: components are all located in the same processor; or, components are located in multiple processors respectively.

Another embodiment of the present invention further provides a storage medium. In this embodiment, the storage medium is arranged to store program codes used for executing the following steps.

At step S1, a first server in a first network receives at least one message sent by a first terminal in the first network, and the at least one message is sent to a second terminal, and the second terminal is located in a second network.

At step S2, the first server determines a mapping relationship between the first terminal and the second terminal, and the mapping relationship includes mapping from at least one service type supported by the first network to at least one service type supported by the second network.

At step S3, the first server sends the at least one message to the second terminal according to the determined mapping relationship.

Optionally, the storage medium is further arranged to store program codes used for executing the following steps.

At step S1, a group chat server or conference server in the first network receives a request message for requesting to recreate a group chat session from one terminal in a group.

At step S2, the group chat server or the conference server sends a notification message to other group chat members in the group according to the request message. And the notification message is used for notifying the other group chat members in the group to recreate the group chat session.

Optionally, in this embodiment, the storage medium includes, but not limited to, various media capable of storing program codes such as a U disk, a ROM, a RAM, a mobile hard disk, a magnetic disk or an optical disk.

Optionally, specific examples in the embodiment refer to the examples described in the at least some abovementioned embodiments and exemplary implementation modes, and will not be elaborated herein.

Obviously, those skilled in the art should know that each component or each step of the present invention is implemented by a universal computing device, and the components or steps are concentrated on a single computing device or distributed on a network formed by a plurality of computing devices, and optionally be implemented by program codes executable for the computing devices, so that the components or steps are stored in a storage device for execution with the computing devices, the shown or described steps may be executed in sequences different from those described here in some circumstances, or form each integrated circuit component respectively, or multiple components or steps therein form a single integrated circuit component for implementation. As a consequence, the present invention is not limited to any specific hardware and software combination.

The above are the exemplary embodiment of the present invention and not intended to limit the present invention. For those skilled in the art, the present invention may have various modifications and variations. Any modifications, equivalent replacements, improvements and the like made within the spirit and principle of the present invention shall fall within the scope of protection of the present invention.

### Industrial Applicability

As mentioned above, the message sending method and device provided by at least some embodiments of the present invention have the following beneficial effects: a problem of incomplete intercommunication rules between a SIMPLE IM specification and a CPM specification in the related technology is solved, and an effect of improving the intercommunication rules between the SIMPLE IM specification and the CPM specification is further achieved.

## Claims

1. A message sending method, comprising:
receiving, by a first server in a first network, at least one message sent by a first terminal in the first network, wherein the at least one message is sent to a second terminal, and the second terminal is located in a second network;
determining, by the first server, a mapping relationship between the first terminal and the second terminal, wherein the mapping relationship comprises mapping from at least one service type supported by the first network to at least one service type supported by the second network; and
sending, by the first server, the at least one message to the second terminal according to the determined mapping relationship.

2. The method as claimed in claim 1, wherein the mapping relationship comprises at least one of: a session-terminal mapping, a session-session mapping, a terminal-session mapping and a terminal-terminal mapping.

3. The method as claimed in claim 1, wherein sending, by the first server, the at least one message to the second terminal according to the mapping relationship comprises:
sending, by the first server, the at least one message to a second server in the second network according to the mapping relationship, wherein the at least one message is sent, by the second server, to the second terminal.

4. The method as claimed in claim 1, wherein before sending, by the first server, the at least one message to the second terminal according to the mapping relationship, the method further comprises:
caching, by the first server, the at least one message.

5. The method as claimed in claim 4, wherein after caching, by the first server, the at least one message, the method further comprises:
creating, by the first server, a session between the first server and the first terminal in a manner of negotiation with the first terminal.

6. The method as claimed in claim 1, wherein before receiving, by the first server in the first network, the at least one message sent by the first terminal in the first network, the method further comprises:
creating, by the first server, a session between the first server and the first terminal in a manner of negotiation with the first terminal.

7. The method as claimed in any one of claims 1-6, wherein the first network and the second network are Rich Communication Suite (RCS) networks supporting different specifications.

8. A message sending method, comprising:
receiving, by a group chat server or conference server in a first network, a request message for requesting to recreate a group chat session from a terminal in a group; and
sending, by the group chat server or the conference server, a notification message to other group chat members in the group according to the request message, wherein the notification message is used for notifying the other group chat members in the group to recreate the group chat session.

9. The method as claimed in claim 8, wherein sending, by the group chat server or the conference server, the notification message to the other group chat members in the group according to the request message comprises:
when the other group chat members comprise at least one terminal in a second network, sending, by the group chat server or the conference server, the notification message to a second server in the second network, wherein the notification message is sent, by the second server, to the at least one terminal in the second network.

10. The method as claimed in claim 8, wherein, when the first network adopts a conference-based group chat mode, the conference server in the first network receives the request message sent by one terminal in the group; and when the first network adopts a conference-free group chat mode, the group chat server in the first network receives the request message sent by the one terminal in the group.

11. The method as claimed in claim 8, wherein receiving, by the group chat server or conference server in the first network, the request message sent by the one terminal in the group comprises:
when the one terminal in the group is a terminal in the first network, receiving, by the group chat server or the conference server, the request message sent by the terminal in the group; and
when the one terminal in the group is a terminal in the second network, receiving, by the group chat server or the conference server, the request message sent by the terminal in the group in a manner of receiving the request message sent by the second server in the second network.

12. The method as claimed in any one of claims 8-11, wherein the first network and the second network are Rich Communication Suite (RCS) networks supporting different specifications.

13. A message sending device, applied to a first server in a first network and comprising:
a first receiving component, arranged to receive at least one message sent by a first terminal in the first network, wherein the at least one message is sent to a second terminal, and the second terminal is located in a second network;
a determination component, arranged to determine a mapping relationship between the first terminal and the second terminal, wherein the mapping relationship comprises mapping from at least one service type supported by the first network to at least one service type supported by the second network; and
a first sending component, arranged to send the at least one message to the second terminal according to the determined mapping relationship.

14. The device as claimed in claim 13, wherein the mapping relationship comprises at least one of: a session-terminal mapping, a session-session mapping, a terminal-session mapping and a terminal-terminal mapping.

15. The device as claimed in claim 13, wherein the first sending component comprises:
a first sending element, arranged to send the at least one message to a second server in the second network according to the mapping relationship, wherein the at least one message is sent, by the second server, to the second terminal.

16. The device as claimed in claim 13, wherein the device further comprises:
a caching component, arranged to cache the at least one message.

17. The device as claimed in claim 16, wherein the device further comprises:
a first creation component, arranged to create a session between the first server and the first terminal in a manner of negotiation with the first terminal.

18. The device as claimed in claim 13, wherein the device further comprises:
a second creation component, arranged to create a session between the first server and the first terminal in a manner of negotiation with the first terminal.

19. The device as claimed in any one of claims 13-18, wherein the first network and the second network are Rich Communication Suite (RCS) networks supporting different specifications.

20. A message sending device, applied to a group chat server or conference server in a first network and comprising:
a second receiving component, arranged to receive a request message for requesting to recreate a group chat session from a terminal in a group; and
a second sending component, arranged to send a notification message to other group chat members in the group according to the request message, wherein the notification message is used for notifying the other group chat members in the group to recreate the group chat session.

21. The device as claimed in claim 20, wherein the second sending component comprises:
a second sending element, arranged to, when the other group chat members comprise at least one terminal in a second network, send the notification message to a second server in the second network, wherein the notification message is sent, by the second server, to the at least one terminal in the second network.

22. The device as claimed in claim 20, wherein, when the first network adopts a conference-based group chat mode, the conference server in the first network receives the request message sent by one terminal in the group; and when the first network adopts a conference-free group chat mode, the group chat server in the first network receives the request message sent by the one terminal in the group.

23. The device as claimed in claim 20, wherein the second receiving component comprises:
a first receiving element, arranged to, when the one terminal in the group is a terminal in the first network, receive the request message sent by the terminal in the group; and
a second receiving element, arranged to, when the one terminal in the group is a terminal in the second network, receive the request message sent by the terminal in the group in a manner of receiving the request message sent by the second server in the second network.
